(19) Europäisches Patentamt
European Patent Office
Office européen des brevets

(11) EP 2 226 946 A2

(12) **EUROPÄISCHE PATENTANMELDUNG**

(43) Veröffentlichungstag:
08.09.2010 Patentblatt 2010/36

(51) Int Cl.:
*H04B 1/04* (2006.01)

(21) Anmeldenummer: 10155305.5

(22) Anmeldetag: 03.03.2010

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR
Benannte Erstreckungsstaaten:
AL BA ME RS

(30) Priorität: 04.03.2009 EP 09154270

(71) Anmelder: Technische Universität Dresden
01069 Dresden (DE)

(72) Erfinder:
• Frotzscher, Andreas
  01824, Kurort Rathen (DE)
• Liang, Dr.-Ing. Ting-Jung
  01069, Dresden (DE)

(74) Vertreter: Lippert, Stachow & Partner
Patentanwälte
Krenkelstrasse 3
01309 Dresden (DE)

(54) **Verfahren zur Kompensation eines Übersprechens eines in einem Sendezweig erzeugten Sendesignales auf einen Empfangszweig**

(57) Der Erfindung, welche ein Verfahren zur Kompensation eines Übersprechens eines in einem Sendezweig erzeugten Sendesignals auf einen Empfangszweig betrifft, liegt die Aufgabe zugrunde, das in den Empfangszweig übersprechende Sendesignal möglichst genau zu kompensieren, wobei das Kompensationsverfahren unabhängig von der Sende- und Empfangsfrequenz sein soll, wobei durch den Einsatz dieses Kompensationsverfahrens die Anforderungen an die analoge Signalverarbeitungeinheit im Empfänger bzw. an die Tx-Rx Isolationsdämpfung des Duplexers gesenkt werden können und das Kompensationsverfahren unabhängig von Temperaturschwankungen und Fertigungstoleranzen sein soll. Die Aufgab wird dadurch gelöst, dass innerhalb des Sendezweiges festgelegte digitale Sendesignalsequenzen (Präambeln) generiert und gesendet werden, dass in dem Empfangszweig mittels dieser digitalen Sendesignalsequenzen eine Übersprechcharakteristik geschätzt wird, dass auf der Grundlage dieser Schätzung ein Signal zur Kompensation des übersprechenden Sendesignals erzeugt wird und dass mittels dieses Kompensationssignals im Bereich der digitalen Basisbandsignalverarbeitung im Empfangszweig die Kompensation des Übersprechens erfolgt. (Fig. 3)

Figur 3

EP 2 226 946 A2

**Beschreibung**

Die Erfindung betrifft ein Verfahren zur Kompensation eines Übersprechens eines in einem Sendezweig erzeugten Sendesignals auf einen Empfangszweig in einem nach dem Direktmisch-Prinzip arbeitenden Sendeempfänger.

Drahtlose Kommunikationssysteme, die das Frequenzduplex-Prinzip (engl.: Frequency Division Duplex, FDD) anwenden, nutzen zwei separate Frequenzbänder für die Kommunikation in der Aufwärts- (engl.: Uplink, UL) und Abwärtsrichtung (engl.: Downlink, DL). In Sendeempfängern (engl.: Transceiver), welche eine gemeinsame Antenne zum Senden und Empfangen nutzen, wird ein Duplexer eingesetzt, um den Sendezweig (engl.: Transmitter, Tx) und den Empfangszweig (engl.: Receiver, Rx) an die Antenne anzubinden. Da diese beiden Zweige zeitgleich arbeiten, muss der Duplexer den Empfangszweig von dem leistungsstarken Sendesignal isolieren.

Die Aufgabe des Duplexers ist es somit, das Sendesignal möglichst verlustfrei zur Antenne zu leiten und das Empfangssignal von der Antenne möglichst verlustfrei zu dem Empfangszweig zu leiten. Gleichzeitig muss jedoch der Duplexer eine ausreichend hohe Isolation zwischen dem Sendezweig und Empfangszweig sicherstellen um das Übersprechen des leistungsstarken Sendesignals in den Empfangszweig zu unterdrücken.

Die zunehmende Miniaturisierung der Sendeempfänger erschwert jedoch die Bereitstellung einer ausreichenden Tx-Rx Isolation des Duplexers. Diese Problematik verschärft sich weiter in frequenzagilen, rekonfigurierbaren Sendeempfängern, welche flexibel auf unterschiedliche Trägerfrequenzen und Signalbandbreiten abgestimmt werden können, um verschiedene Funkstandards auf unterschiedlichen Trägerfrequenzen mit einem Sendeempfänger unterstützen zu können. Die Frequenzagilität der analogen Baugruppen des Sendeempfängers, in der englischsprachigen Literatur auch analoges Frontend (AFE) genannt, erschwert deutlich die Erfüllung der gestellten Anforderungen. Infolge der unzureichenden Tx-Rx Isolation spricht ein signifikanter Teil des Sendesignals in den Empfangszweig über und kann die Demodulation des Empfangssignals empfindlich stören und somit die Leistungsfähigkeit des Empfänger signifikant verschlechtern. Dieses Senderübersprechen wird in der englischsprachigen Literatur als Tx Leakage (TxL) bezeichnet. Zur Vermeidung dieser Degradation der Leistungsfähigkeit muss eine ausreichend hohe Tx-Rx Isolationsdämpfung sichergestellt werden.

In der Vergangenheit wurde dem Problem des Senderübersprechens durch einen zusätzlichen Bandpass-Filter in der Hochfrequenz-Stufe des Empfangszweiges zur Unterdrückung des übersprechende Sendesignals begegnet, wie in Brandolini, M., P. Rossi, D. Manstretta und F. Svelto: Toward multistandard mobile terminals - fully integrated receivers requirements and architectures. IEEE Transactions on Microwave Theory and Techniques, 53(3):1026-1038, März 2005 oder Lie, D. Y. C., J. Kennedy, D. Livezey, B. Yang, T. Robinson, N. Sornin, C. Saint und L. E. Larson: Circuit and System Design for a Homodyne W-CDMA Front-End Receiver RF IC. In: Proc. International Symposium on VLSI Design, Automation and Test, Seiten 1-4, April 2006 oder Bar, P., A. Giry, P. Triolet, G. Parat, D. Pache, P. Ancey und J. F. Carpentier: Full-Duplex Receiver And PA Integration With BAW Devices. In: Proc. IEEE Topical Meeting on Silicon Monolithic Integrated Circuits in RF Systems SiRF 2008, Seiten 9-12, Januar 2008 gezeigt wird. Ein anderer Vorschlag sieht die Erzeugung einer gegenphasigen Kopie des übersprechenden Sendesignals mithilfe eines zusätzlichen baugleichen Sendezweiges vor und wurde in Schacherbauer, W., A. Springer, T. Ostertag, C. C. W. Ruppel und R. Weigel: A flexible multiband frontend for software radios using high IF and active interference cancellation. In: Proc. IEEE MTT-S International Microwave Symposium Digest, Band 2, Seiten 1085-1088, Mai 2001 gezeigt. Verschiedene Autoren schlugen auch die Nutzung eines analogen, adaptiven Filters parallel zu dem Duplexer zwischen dem Sende- und Empfangszweig zur Unterdrückung des übersprechenden Sendesignals vor, wie in Williamson, M., S. Kannangara und M. Faulkner: Performance Analysis of Adaptive Wideband Duplexer. In: Australian Telecommunications Networks and Applications Conference, 2003 oder O'Sullivan, T., R. A. York, B. Noren und P. M. Asbeck: Adaptive duplexer implemented using single-path and multipath feedforward techniques with BST phase shifters. IEEE Transactions on Microwave Theory and Techniques, 53(1):106-114, Januar 2005 oder Kannangara, S. D.: Adaptive Duplexer for Software Radio. Doktorarbeit, Victoria University, Melbourne, 2006 oder Aparin, V., G. J. Ballantyne, C. J. Persico und A. Cicalini: An integrated LMS adaptive filter of TX leakage for CDMA receiver front ends. IEEE Journal of Solid-State Circuits, 41 (5):1171-1182, Mai 2006 vorgeschlagen wurde. Diese Lösungsansätze zielen somit auf die Interferenzvermeidung ab. Sie arbeiten alle in dem Hochfrequenz-Teil des analogen Frontends, weshalb sie nur begrenzt rekonfigurierbar sind. Zudem erhöhen sie die Komplexität des analogen Frontends und eignen sich somit nur bedingt für frequenzagile Multiband-Transceiver.

Eine weitere Möglichkeit die Problematik des Senderübersprechens zu lösen, bietet die Kompensation des TxL Interferenzsignals im dem digitalen Frontend des Empfangszweiges. Die TxL Interferenz in dem analogen Empfänger-Frontend wird bewusst zugelassen. Das digitale Frontend des Empfangszweiges kennt das eigene, diskrete Sendesignal und kann deshalb die resultierende TxL Interferenz im digitalen Basisband mithilfe von Signalverarbeitungsalgorithmen schätzen und kompensieren. Dies bietet die Vorteile, flexibel für unterschiedliche Funkstandards einsetzbar zu sein und die Anforderungen an die Tx-Rx Isolation des Duplexers, als auch an das analoge Empfänger-Frontend senken und somit die Komplexität des analogen Frontends reduzieren zu können.

In der Entwicklung des analogen Empfangszweiges für Multistandard-Sendeempfängern wird das Direktmisch-Prinzip aufgrund seiner Flexibilität und Rekonfigurierbarkeit bevorzugt ausgewählt. Jedoch leidet dieses Prinzip an einigen analogen Nichtidealitäten, zum Beispiel der I/Q-Imbalance und den Intermodulationsprodukten zweiter Ordnung (IM2). Im Fall des Senderübersprechens entsteht durch die Nichtlinearität des Abwärtsmischers ein Intermodulationsprodukt zweiter Ordnung des übergesprochenen Sendesignals, das im Basisband liegt und folglich eine starke Interferenz auf das erwünschte herunter gemischte Empfangssignal hervorruft und dessen Demodulation erschwert.

Aufgabe der Erfindung ist es, das in den Empfangszweig übersprechende Sendesignal möglichst genau zu kompensieren, wobei das Kompensationsverfahren unabhängig von der Sende- und Empfangsfrequenz sein soll. Desweiteren soll durch den Einsatz dieses Kompensationsverfahrens die Anforderungen an die analoge Signalverarbeitungeinheit im Empfänger bzw. an die Tx-Rx Isolationsdämpfung des Duplexers gesenkt werden können. Zusätzlich soll das Kompensationsverfahren unabhängig von Temperaturschwankungen und Fertigungstoleranzen sein.

Gemäß der Erfindung wird die Aufgabe dadurch gelöst, dass innerhalb des Sendezweiges festgelegte digitale Sendesignalsequenzen (Präambeln) generiert und gesendet werden, dass in dem Empfangszweig mittels dieser digitalen Sendesignalsequenzen eine Übersprechcharakteristik geschätzt wird, dass auf der Grundlage dieser Schätzung ein Signal zur Kompensation des übersprechenden Sendesignals erzeugt wird und dass mittels dieses Kompensationssignals im Bereich der digitalen Basisbandsignalverarbeitung im Empfangszweig die Kompensation des Übersprechens erfolgt.

Die Störung durch das in den Empfangszweig übersprechende Sendesignal enthält Information über den Sendezweig, den Empfangszweig und die Verkopplung beider Zweige durch die Tx-Rx Isolationsdämpfung des Duplexers. In der Nachrichtentechnik werden typischerweise dem Empfänger bekannte Signalsequenzen, sog. Präambeln, mitgesendet, um den Übertragungskanal zwischen Sender und Empfänger schätzen zu können. Die Idee der Erfindung ist es, spezielle Präambeln durch den Sendezweig zu generieren und auszusenden. Diese Präambeln sind in einer solchen Weise konstruiert, dass sie sowohl für die Schätzung des Übertragungskanals als auch für die Schätzung der Übersprechcharakteristik geeignet sind. In dem Empfangszweig kann dann mithilfe der empfangenen von dem eigenen Sendezweig ausgesandten Präambeln die erforderliche Übersprechcharakteristik geschätzt werden. Das Ergebnis der Schätzung wird zur Konstruktion eines Signals zur Kompensation des übersprechenden Sendesignals genutzt. Die Idee der Erfindung legt dabei nicht explizit die Position der Schätzung und Kompensation in der Signalverarbeitungs-kette des Empfangszweiges fest. Sie beschreibt lediglich die Schätzung und Kompensation nach der Analog-Digital-Wandlung im Empfangszweig, also in der digitalen Signalverarbeitungseinheit des Empfangszweiges.

In einer Ausführung des Verfahrens ist vorgesehen, dass sich die Sendesignalsequenzen aus Orthogonal Frequency Division Multiplexing (OFDM) Symbolen zusammensetzen.

Diese OFDM Symbole sind vorzugsweise speziell konstruiert, so dass diese sowohl die erfindungsgemäße Kompensation des Übersprechens des Sendesignals auf den Empfangszweig als auch die im Stand der Technik übliche Schätzung des Übertragungskanal zwischen Sender und Empfänger zu ermöglichen.

Die Erfindung soll nachfolgend anhand eines Ausführungsbeispiels näher erläutert werden. In den zugehörigen Zeichnungen zeigt

Fig. 1     ein Systemmodell dargestellt als Blockdiagramm eines mobilen Frequenzduplex-Sendeempfängers, welcher das Direktmischprinzip anwendet,

Fig. 2     ein Systemmodell des Senderübersprechens in Direktmischempfängern im äquivalenten, diskreten Basisband,

Fig. 3     ein Blockdiagramm der Schätzung und Kompensation der TxL Interferenz im digitalen Basisband,

Fig. 4     ein Blockdiagramm der präambelbasierten TxL Schätzung und Kompensation,

Fig. 5     eine Darstellung der Anforderungen an die Kreuzprodukte verschiedener Präambel-Unterträger,

Fig. 6     einen beispielhaften Entwurf der Präambel-Unterträger,

Fig. 7     eine Tabelle mit Systemparametern der digitalen TxL Kompensation,

Fig. 8     ein Diagramm darstellend einen Kompensationsgewinn $G_C$ der vorgeschlagenen TxL Schätz- und Kompensationsverfahren als Funktion des SNR $\gamma_{Est}$ (DL, UL: Mehrträgerverfahren nach der Tabelle in Figur 7, $L_{TxL} = 6$),

Fig. 9     ein Diagramm darstellend einen Kompensationsgewinn $G_C$ der vorgeschlagenen TxL Schätz- und Kompensationsverfahren als Funktion der Schätzblockgröße $N_E$ (DL, UL: Mehrträgerverfahren nach der Tabelle in Figur 7, $L_{TxL} = 6, \tau = 1$),

Fig. 10    ein Diagramm darstellend eine Rahmenfehlerrate (FER) nach der TxL Kompensation mithilfe der vorgestellten Schätzverfahren (DL, UL: Mehrträgerverfahren nach Tabelle 1, $L_{TxL} = 6$, $\Upsilon_{TxL} = 10dB.N_E = 4008$ ) und

Fig. 11    ein Diagramm darstellend SNR Verluste nach der TxL Kompensation mithilfe der vorgestellten Schätzverfahren (DL, UL: Mehrträgerverfahren nach der Tabelle in Figur 7, $L_{TxL} = 6$, $\Upsilon_{TxL} = 10dB,N_E = 4008$

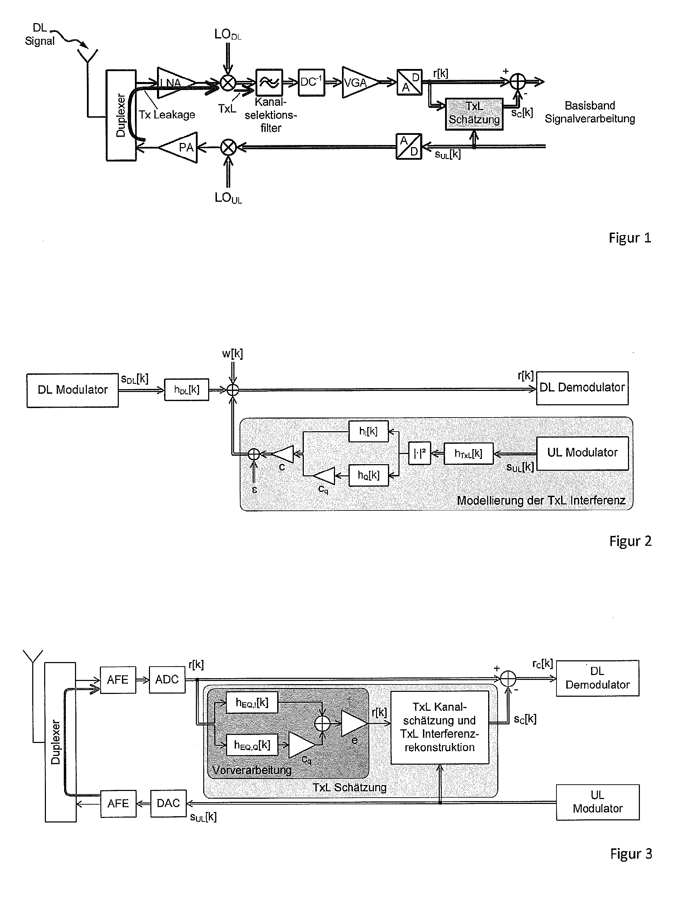

Nachfolgend wird ein der Betrachtung zugrunde liegendes Systemmodell dargestellt. Das Problem des Tx Leakage in Frequenzduplex-Sendeempfängern tritt sowohl in Feststationen (Basisstationen) als auch in mobilen Endgeräten (Mobilstationen) auf. Zur Gewährleistung einer eindeutigen Notation der Signale konzentrieren sich die Ausführungen in diesem Dokument auf das Tx Leakage (TxL) in dem mobilen Endgerät, wie in Figur 1 dargestellt ist. Dies bedeutet jedoch keine Einschränkung der Allgemeingültigkeit der nachfolgenden Ausführungen. Die dargestellten Zusammenhänge können problemlos auf die Problematik des Tx Leakage in Feststationen übertragen werden.

Figur 1 zeigt ein Blockdiagramm eines mobilen Frequenzduplex-Sendeempfängers, welcher nach dem Direktmischprinzip arbeitet. Infolge der ungenügenden Tx-Rx Isolation des Duplexers spricht das zu sendende UL Signal in den Empfangszweig über und stört somit die Demodulation des empfangenen DL Signals. In dem betrachteten Sendeempfänger wird das Direktmischprinzip zur Abwärtsmischung im Empfangszweig genutzt, um die Realisierung der geforderten Rekonfigurierbarkeit und Frequenzagilität des Transceivers zur Unterstützung unterschiedlicher Frequenzbänder zu realisieren. Infolge seiner praktisch unvermeidbaren Nichtlinearität erzeugt der Abwärtsmischer in dem Empfangszweig ein Intermodulationsprodukt zweiter Ordnung des übersprechenden UL Signals. Dieses Intermodulationsprodukt erscheint im Basisband um die Frequenz f=0. Es überlagert das herunter gemischte, empfangene DL Signal und erschwert dessen Demodulation.

Das Ausgangssignal des Abwärtsmischers durchläuft die Kanalselektionsfilterung, die Entfernung der Gleichsignalkomponente (engl.: DC Offset Compensation, DC$^{-1}$) und den einstellbaren Verstärker (engl.: Variable Gain Amplifier, VGA) zur Anpassung des Signals an den Aussteuerbereich des Analog-Digital Wandlers (engl.: Analog-to-Digital Converter, ADC). In der Praxis wird die Analog-Digital Wandlung zumeist mit einer Überabtastung durchgeführt, um der Zeitsynchronisation in dem digitalen Frontend eine ausreichende zeitliche Auflösung bereitzustellen. In der Praxis sind Überabtastfaktoren $\eta=2,...,8$ gebräuchlich. Das diskrete ADC Ausgangssignal $r[k]$ wird dem grau hinterlegten Block in Figur 1 zugeführt, welcher das TxL Interferenzsignal schätzt, ein entsprechendes Kompensationssignal $s_C[k]$ erzeugt und es von $r[k]$ subtrahiert.

Im Fall einer ADC Überabtastung mit $\eta \geq 2$ wurde in Frotzscher, A.: Schätzung und Kompensation des Senderübersprechens in Frequenzduplex-Sendeempfängern. Doktorarbeit, Technische Universität Dresden, 2009 gezeigt, dass das diskrete Signal $r[k]$ in Empfangszweig des betrachteten Sendeempfängers durch das folgende Systemmodell im äquivalenten, diskreten Basisband modelliert werden kann:

$$r[k] = r_I[k] + jr_Q[k] = \underbrace{(h_{DL} * s_{DL})[k]}_{a[k]} + \underbrace{c(h_I[k] + c_q h_Q[k]) * |h_{TxL} * s_{UL}|^2[k] + \mathcal{E}}_{b[k]} + w[k]$$

$$(1)$$

Realisiert der ADC eine Überabtastung mit einem kleineren Überabtastfaktor ($\eta<2$) kann dieses diskrete Systemmodell nicht direkt angewendet werden. Unter der Voraussetzung einer Aliasing-freien Abtastung in dem ADC muss die Abtastrate nachträglich auf $\eta \geq 2$ erhöht werden, um das in Gleichung (1) vorgestellte, diskrete Systemmodell für eine digitale Kompensation der TxL Interferenz nutzen zu können.

In Gleichung (1) bezeichnet * den diskreten Faltungsoperator. Das Systemmodell in Gleichung (1) beschreibt den Einfluss des DL Signals und des übersprechenden UL Signals auf das diskrete Basisband-Signal $r[k]$ im Empfangszweig. Die Gleichung (1) besteht aus drei Termen, die im nachfolgenden beschrieben werden.

Der Term $a[k]$ beschreibt das gewünschte, diskrete DL Signal $s_{DL}[k]$ im Basisband, welches durch den DL Übertragungskanal $h_{DL}[k]$ verzerrt wurde. Folglich beschreibt der Term $a[k]$ in (1) das direkt ins Basisband heruntergemischte, empfangene DL Signal.

Der Term $b[k]$ in Gleichung 1 beschreibt die mittelwertfreie TxL Interferenz nach der Analog-Digital Wandlung im Empfangszweig. Das diskrete UL Signal, welches am Eingang des Digital-Analog Wandlers (engl.: Digital-to-Analog Converter, DAC) in dem Sendezweig anliegt, wird durch $s_{UL}[k]$ repräsentiert. Dieses Signal spricht in den Empfangszweig über. Dabei wird es durch den Aufwärtsmischer und den Leistungsverstärker (engl.: power amplifier, PA) im Sendezweig, die Tx-Rx Isolation des Duplexers und den rauscharmen Vorverstärker (engl.: low noise amplifier, LNA) im Empfangszweig verstärkt, bedämpft und gefiltert. Die Kombination dieser Filterungen und Verstärkungen zu einer Filteroperation kann als *Tx Leakage Kanal* (TxL Kanal) aufgefasst werden, mit der diskreten Impulsantwort $h_{TxL}[k]$ der Länge $L_{TxL}$. Die Bildung des Betragsquadrats des Faltungsproduktes $(h_{TxL}{}^*s_{UL})[k]$ modelliert die Bildung des Intermodulationsproduktes zweiter Ordnung des übersprechenden Sendesignals. Der Term $c \in \{+1,-1\}$ ist eine Vorzeichenvariable und leitet sich aus der Nichtlinearität des I/Q Abwärtsmischers im Empfangszweig ab. Der Term $c_q$ ist ein Skalierungsfaktor, der die I/Q Unsymmetrie d.h. der TxL Interferenz angibt und eine Folge der zufällig voneinander abweichenden Nichtlinearität der Mischer im I- und Q-Pfad ist. Die TxL Interferenz wird durch die analogen Kanalselektionsfilter (engl.: Channel Select Filter, CSF) im I- und Q-Pfad bandbegrenzt. Die CSF Impulsantworten im I- und Q-Pfad werden äquivalent durch die diskreten Impulsantworten $h_I[k]$ und $h_Q[k]$ der Länge $L$ repräsentiert. Der Einfluss der DC Offset Kompensation äußert sich in der additiven Konstante $\varepsilon$. Somit repräsentiert der Term $b[k]$ in (1) die mittelwertfreie TxL Interferenz nach der Analog-Digital Wandlung im Empfangszweig.

Der Term $w[k]$ in ist ein Gausssches Rauschsignal und modelliert die äquivalente Zusammmenfassung der verschiedenen Rauschquellen des analogen Frontends und das Quantisierungsrauschen des ADC.

Das in Gleichung (1) vorgestellte, diskrete Systemmodell ist in Figur 2 grafisch dargestellt.

Um den Einfluss des Senderübersprechens auf das DL-Signal unter verschiedenen Signalstärkebedingungen zu bewerten, wird das Signal-zu-Interferenz-Verhältnis (engl.: Signal-to-Interference Ratio, SIR) $\gamma_{TxL}$ an dem Eingang des ADC im Empfangszweig bestimmt, welches das Leistungsverhältnis zwischen dem gewünschten DL Signal und der TxL Interferenz beschreibt, jeweils betrachtet innerhalb der DL Signalbandbreite $BW$ und exklusive der Gleichsignalkomponente:

$$\gamma_{TxL} = \left. \frac{P_{DL}}{P_{TxL}} \right|_{|f| < \frac{BW}{2}, f \neq 0} . \qquad (2)$$

Nachfolgend werden einige Vorbetrachtungen zur digitalen Schätzung und Kompensation des Senderübersprechens dargestellt.

Die TxL Interferenz ist eine additive Störung, sodass die digitale TxL Kompensation sich aus der Rekonstruktion der TxL Interferenz und der anschließenden Subtraktion von dem Empfangssignal $r[k]$ zusammensetzt. Zur Gewährleistung der Unabhängigkeit von den zu unterstützenden Funkstandards wird die TxL Interferenz $b[k]$ in dem diskreten Empfangssignal $r[k]$ direkt nach der Analog-Digital Wandlung kompensiert (Siehe Abb. 1) . Das diskrete UL Signal $s_{UL}[k]$ und das diskrete Empfangssignal $r[k]$ sind dem digitalen Frontend bekannt. Daher erfordert die Rekonstruktion der TxL Interferenz $b[k]$ die Kenntnis über folgende Parameter:

- die äquivalenten, diskreten Impulsantworten $h_I[k]$ und $h_Q[k]$ der Kanalselektionsfilter im I- und Q-Pfad,

- die TxL I/Q Unsymmetrie $c_q$,

- die Vorzeichenvariable $c$,

- die äquivalente, diskrete Impulsantwort des TxL Kanals $h_{TxL}[k]$

- und den DC Offset Korrekturterm $\varepsilon$.

Die Impulsantworten der Kanalselektionsfilter, die TxL I/Q Unsymmetrie $c_q$ und die Vorzeichenvariable $c$ sind Eigenschaften des analogen Empfänger-Frontends und sind nur langsam zeitvariant infolge von Temperaturschwankungen und Alterungserscheinungen der Schaltkreise des Sendeempfängers. Deshalb empfiehlt sich die Bestimmung der äquivalenten, diskreten CSF Impulsantworten $h_I[k]$ und $h_Q[k]$ vor der TxL Schätzung. Dies kann mithilfe eines analogen, dem digitalen Empfänger-Frontend bekannten Testsignals erfolgen, das in die Eingänge der Kanalselektionsfilter eingespeist wird, während keine Funkverbindung aufgebaut ist. In gleicher Vorgehensweise können die TxL I/Q Unsymmetrie $c_q$ und die Vorzeichenvariable $c$ bestimmt werden. Somit muss noch die Impulsantwort des TxL Kanals $h_{TxL}[k]$ und der DC Offset Korrekturterm $\varepsilon$ geschätzt werden. Zur Vereinfachung der Lösung dieses Schätzproblems wird das diskrete Empfangssignal $r[k]$ einer Vorverarbeitung unterzogen. Entsprechend Gleichung (1) wird in einem ersten Schritt die Filterung der TxL Interferenz mit $h_I[k]$ und $h_Q[k]$ entzerrt. Hierfür werden lineare Entzerrer (engl.: Equalizer, EQ) in Form von Transversalfiltern mit einer endlichen Impulsantwort (engl.: Finite Impulse Response, FIR) eingesetzt. Die Impulsantworten der Entzerrer $h_{EQ,I}[k]$ und $h_{EQ,Q}[k]$ werden dabei auf Basis von $h_I[k]$ und $h_Q[k]$ nach dem Kriterium des kleinsten, mittleren quadratischen Fehlers (engl.: Minimum Mean Square Error, MMSE) bestimmt.

Daraus folgt, dass für die Kombination der Impulsantworten der Kanalselektionsfilter und der Entzerrer geschrieben werden kann

$$(h_I * h_{EQ,I})[k] \cong \delta[k - k_{CSF}], \quad (h_Q * h_{EQ,Q})[k] \cong \delta[k - k_{CSF}],$$

(3)

wobei

$$\delta[k] = \begin{cases} 1 & \text{für } k = 0 \\ 0 & sonst \end{cases}$$

die Kronecker-Deltafunktion bezeichnet. Die Äquivalenz in (3) tritt im Fall einer vollständigen Entzerrung auf. Desweiteren zeigt Gleichung (3), dass die Kanalselektionsfilterung mit anschließender Entzerrung eine Zeitverzögerung $k_{CSF}$ der Signale verursacht, die in der Schätzung des TxL Kanals berücksichtigt werden muss. Die I- und Q-Komponente des entzerrten Signals werden anschließend entsprechend der TxL I/Q Unsymetrie $c_q$ und der Vorzeichenvariable $c$ nach dem (engl.:) *Maximum Ratio Combining* (MRC) Prinzip zusammengefügt und führen zu dem diskreten, reellwertigen Empfangssignal

$$\tilde{r}[k] = \frac{c}{(1+c_q^2)}\Big((h_{EQ,I} * r_I)[k] + c_q(h_{EQ,Q} * r_Q)[k]\Big) = \tilde{b}[k] + \tilde{w}[k]$$

. (4)

Im Fall einer vollständigen Entzerrung der Kanalselektionsfilterung kann die resultierende TxL Interferenz $\tilde{b}[k]$ durch

$$\tilde{b}[k] = \frac{c}{(1+c_q^2)}\Big((h_I * h_{EQ,I})[k] + c_q^2(h_Q * h_{EQ,Q})[k]\Big) * \big|h_{TxL} * s_{UL}\big|^2[k] + \tilde{\varepsilon}$$

(5)

ausgedrückt werden, wodurch sich das Systemmodell in Gleichung (4) umformen lässt zu

$$\tilde{r}[k] = \big|h_{TxL} * s_{UL}\big|^2[k - k_{CSF}] + \tilde{\varepsilon} + \tilde{w}[k]$$

. (6)

Das empfangene DL Signal $a[k]$ und das Rauschsignal $w[k]$ enthält keine Information über die Tx Leakage Interferenz und stellen somit für die TxL Kanalschätzung ein Interferenz- bzw. Rauschsignal dar. Daher sind sie in Gleichung (6) zu dem Rauschsignal $\tilde{w}[k]$ zusammengefasst.

Die TxL Schätzung bestimmt, basierend auf dem Empfangssignal $\tilde{r}[k]$ und dem UL Signal $s_{UL}[k]$, die Impulsantwort des TxL Kanals und den DC Offset Korrekturterm und liefert die zugehörigen Schätzwerte $\hat{h}_{TxL}[k]$ und $\hat{\varepsilon}$. Die somit rekonstruierte TxL Interferenz $s_C[k]$

$$s_C[k] = c\Big(h_I[k] + jc_q h_Q[k]\Big) * \Big(\big|\hat{h}_{TxL} * s_{UL}\big|^2[k] + \hat{\varepsilon}\Big)$$

(7)

wird anschließend als Kompensationssignal von $r[k]$ abgezogen. Die Leistungsfähigkeit der TxL Schätzung und Kompensation lässt sich mithilfe des erzielten Kompensationsgewinns ausdrücken

$$G_C = \frac{\mathrm{E}\left\{|b[k]|^2\right\}}{\mathrm{E}\left\{|b[k] - s_C[k]|^2\right\}} . \qquad (8)$$

Er beschreibt die Reduktion der TxL Interferenzleistung durch die Kompensation. Der Signal-Rauschabstand $\gamma_{Est}$ bezeichnet schließlich das Leistungsverhältnis zwischen der TxL Interferenz $\tilde{b}[k]$ und dem Rauschsignal $\tilde{w}[k]$

$$\gamma_{Est} = \frac{\mathrm{E}\left\{|\tilde{b}[k]|^2\right\}}{\mathrm{E}\left\{|\tilde{w}[k]|^2\right\}} . \qquad (9)$$

und repräsentiert den Arbeitspunkt der TxL Kanalschätzung.

Die Anordnung der Tx Leakage Schätzung und Kompensation in einem Sendeempfänger ist in der Figur 3 zusammengefasst.

Nachfolgend wird das erfindungsgemäße Verfahren erläutert.

Funksysteme stehen vor dem inhärenten Problem, den Übertragungskanal zu schätzen. Ein weit verbreiteter Ansatz hierfür ist die Nutzung festgelegter Sendesignalsequenzen, sog. Präambeln, welche dem Empfänger bekannt sind. Diesem Grundprinzip folgt das in diesem Ausführungsbeispiel vorgestellte Schätzverfahren und wurde von dem Erfinder dieser Patentanmeldung erstmals in der Arbeit Frotzscher, A. und G. Fettweis: Preamble design for the digital compensation of Tx Leakage in zero-IF receivers. In: Proc. IEEE 10th Workshop on Signal Processing Advances in Wireless Communications SPAWC '09' Seiten 429-433, vorgestellt. Es zielt auf die Schätzung der Übertragungsfunktion des TxL Kanals ab, woraus anschließend die zugehörige Impulsantwort berechnet wird. Infolge der zeitgleichen Übertragung des UL Signals durch den UL Übertragungskanal zu der Basisstation und durch den TxL Kanal in den eigenen Empfangszweig müssen die im UL abgestrahlten Präambeln sowohl für die Schätzung des UL Kanals und des TxL Kanals geeignet sein.

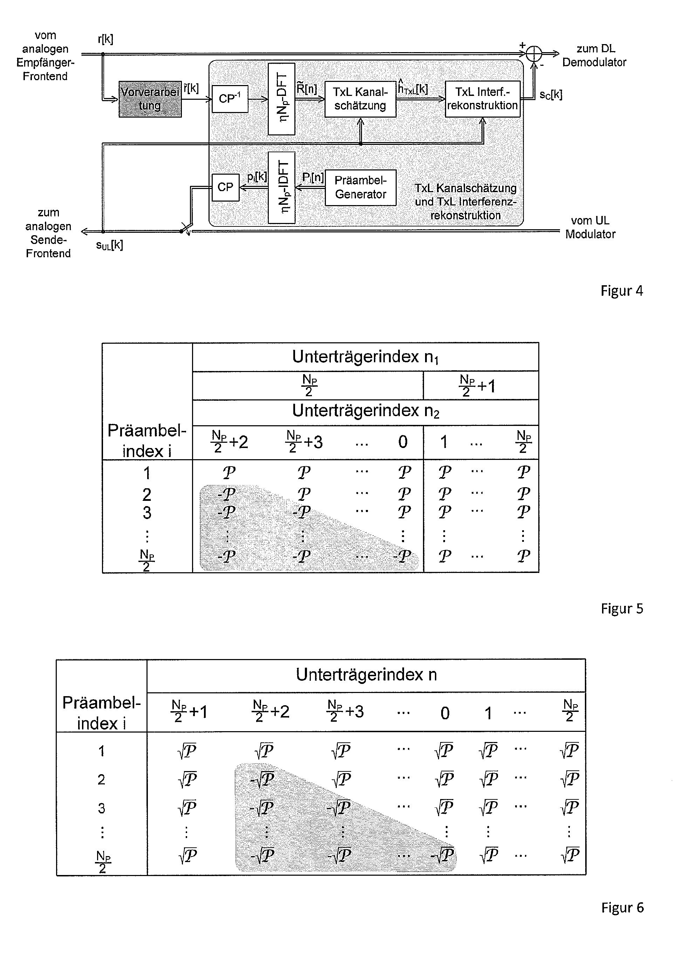

Zur besseren Nachvollziehbarkeit der Erläuterungen ist in der Figur 4 ein Blockdiagramm des vorgestellten Schätzverfahrens gezeigt.

Das $\eta$-fach überabgetastete UL Sendesignal entsteht aus dem Zeitmultiplex zwischen den erwähnten Präambeln und dem, vom dem UL Modulator erzeugten, informationstragenden Signal. Hierbei werden $N_P/2$ speziell entworfene Orthogonal Frequency Division Multiplexing (OFDM) Symbole mit $\eta N_P$ Unterträgern als Präambeln genutzt. Weil das UL Signal $s_{UL}[k]$ direkt dem DAC zugeführt wird, der auf einer $\eta$-fache Überabtastung arbeitet, dürfen nur die inneren $N_P$ Präambel-Unterträger genutzt werden. Andernfalls würde die von dem jeweils betrachteten Funkstandard spezifizierte Frequenzmaske verletzt werden. Die Anzahl $N_P$ der aktiven Präambel-Unterträger ist ein Entwurfsparameter des Schätzansatzes und kann vollkommen unabhängig von einem evtl. im UL zur Datenübertragung eingesetztem Mehrträgerverfahren gewählt werden. Es wird sich im weiteren Verlauf zeigen, dass $N_P$ mindestens so groß wie die TxL Kanallänge gewählt werden muss und des Weiteren $\eta N_P$ mindestens der UL Kanallänge entsprechen muss.

Die Zeitsequenz $p_i[k]$ der $i$.ten Präambel errechnet sich aus der $\eta N_P$-Punkte Inverse Diskrete Fourier Transformation (IDFT) der Präambel-Unterträger $P_i[n]$, wobei $n$ den Unterträgerindex bezeichnet

$$p_i[k] = \frac{1}{\eta N_P} \sum_{n=-N_P/2+1}^{N_P/2} P_i[n] e^{i2\pi\frac{kn}{\eta N_P}} \qquad (10)$$

Zur Vermeidung von Intersymbolinterferenz (ISI) durch den TxL Kanal beziehungsweise den UL Kanal wird zwischen aufeinanderfolgenden, ungleichen Präambeln eine zyklische Erweiterung (CP) eingefügt. Die Länge der CP muss dabei mindestens der Länge des TxL Kanals, als auch der Länge des UL Kanals entsprechen. Zur Schätzung des TxL Kanals werden im Empfangszweig die empfangenen, von dem DL Signal und dem Rauschsignal überlagerten UL Präambeln dem TxL Schätzer zugeführt, wie in der Figur 4 dargestellt. Zunächst wird die in Abschnitt Vorbetrachtungen oben beschriebene Signalvorverarbeitung des Signals durchgeführt, d.h. die digitale CSF Entzerrung und das *Maximum Ratio Combining* der I- und Q-Komponente des Empfangssignals. Unter Beachtung der Zeitverzögerung $k_{CSF}$ infolge der CSF Entzerrung wird die zyklische Erweiterung entfernt. Das vorverarbeitete Empfangssignal der $i.$ten Präambel soll mit $\tilde{r}_i[k]$ bezeichnet werden und lässt sich, ausgehend von (6) durch

$$\tilde{r}[k] = \left| h_{TxL} \otimes p_i \right|^2 [k] + \tilde{\varepsilon} + \tilde{w}[k] \qquad (11)$$

beschreiben. Infolge der zyklischen Erweiterung wird die Periodizität der Präambeln emuliert, welche zu einer zirkularen Faltung der Präambel $p_i[k]$ mit der TxL Kanalimpulsantwort $h_{TxL}[k]$ führt. Somit unterscheidet sich die Struktur der empfangenen TxL Interferenz von dem Empfangssignal eines klassischen OFDM Systems lediglich in der Bildung des Betragsquadrats des zirkularen Faltungsproduktes. Die anschließende Anwendung einer $\eta N_P$-Punkte Diskreten Fourier Transformation (DFT) auf $\tilde{r}_i[k]$ führt zu

$$\tilde{R}_i[n] = \mathrm{DFT}_{\eta N_P} \left\{ \left| h_{TxL} \otimes p_i \right|^2 [k] \right\} + \tilde{\varepsilon}\delta[n] + \tilde{W}[n] \qquad (12)$$

Beschreibt $H_{TxL}[n] = \mathrm{DFT}_{\eta N_P}\{hTxL[k]\}$ die diskrete Übertragungsfunktion des TxL Kanals, so kann $\tilde{R}_i[n]$ unter Beachtung der zyklischen Eigenschaften der DFT zu

$$\tilde{R}_i[n] = \underbrace{\frac{1}{\eta N_P} \left( H_{TxL}[n]P_i[n] \right) \otimes \left( H_{TxL}^*[-n]P_i^*[-n] \right)}_{\tilde{B}_i[n]} + \tilde{\varepsilon}\delta[n] + \tilde{W}[n] \qquad (13)$$

ausformuliert werden. Die einzelnen Unterträgerwerte der Übertragungsfunktion sollen äquivalent als Übertragungskoeffizienten bezeichnet werden. Weil lediglich die $N_P$ inneren Präambel-Unterträger genutzt werden, reduziert sich die zirkulare Faltung in (13) zu einer gewöhnlichen Faltung und die TxL Interferenz im Frequenzbereich $\tilde{B}_i[n]$ lässt sich durch

$$\tilde{B}_i[n] = \begin{cases} \dfrac{1}{\eta N_P} \displaystyle\sum_{m=-N_P/2+1}^{n+N_P/2} H_{TxL}[n]H_{TxL}^*[m-n]P_i[m]P_i^*[m-n] & n \in [-N_P+1,1] \\[2em] \tilde{\varepsilon} + \dfrac{1}{\eta N_P} \displaystyle\sum_{m=-N_P/2+1}^{N_P/2} \left| H_{TxL}[n]P_i[m] \right|^2 & n = 0 \\[2em] \dfrac{1}{\eta N_P} \displaystyle\sum_{m=n-N_P/2+1}^{N_P/2} H_{TxL}[n]H_{TxL}^*[m-n]P_i[m]P_i^*[m-n] & n \in [1, N_P] \end{cases} \qquad (1)$$

ausdrücken. Die Schätzung der TxL Kanalimpulsantwort erfolgt nun auf Basis der empfangenen OFDM Symbole $\tilde{R}_i[n]$. Das vorverarbeitete, diskrete Empfangssignal $\tilde{r}_i[k]$ ist reellwertig, sodass der Realteil bzw. Imaginärteil von $\tilde{R}_i[n]$ eine gerade bzw. ungerade Funktion in $n$ sind. Deshalb kann die TxL Kanalschätzung im Folgenden auf die Betrachtung der negativen Unterträger von $\tilde{R}_i[n]$ beschränkt werden.

Das Signal $\tilde{W}[n]$ in Gleichung 12 ist die Fouriertransformierte von $\tilde{w}[k]$ und besteht aus der Zusammenfassung des empfangenen DL Signals, des Rauschens des analogen Frontends und des Verzerrungsrauschens der Quantisierung.

**Schätzverfahren:**

Zur Minimierung des Rauscheinflusses von $\widetilde{W}[n]$ auf die TxL Kanalschätzung wird jede der $N_P/2$ verschiedenen Präambeln $N_w$-fach wiederholt ausgesandt. In dem Empfangszweig wird dann über die empfangenen OFDM Symbole $\widetilde{R}_i[n]$ jeder Präambel gemittelt. Die Schätzung des TxL Kanals folgt einem dreistufigen Ansatz.

1. Schätzung ausgewählter Kreuzprodukte $H_{TxL}[n_1]H_{TxL}^*[n_2]$ der Übertragungskoeffizienten in(14). Die geschätzten Kreuzprodukte sollen als *Verbundkoeffizienten* $\hat{H}_{joint}[n_1,n_2] = \hat{H}_{TxL}[n_1]\hat{H}_{TxL}^*[n_2]$ bezeichnet werden, wobei $\hat{H}_{TxL}[n]$ der Schätzwert zu $H_{TxL}[n]$ ist.

2. Berechnung der geschätzten Übertragungskoeffizienten $\hat{H}_{TxL}[n]$ auf Basis von $\hat{H}_{joint}[n_1,n_2]$.

3. Berechnung der geschätzten TxL Kanalimpulsantwort $\hat{h}_{TxL}[k]$ auf Basis von $\hat{H}_{TxL}[n]$.

Dabei muss bedacht werden, dass durch die Beschränkung der Präambeln auf die $N_P$ inneren Unterträger die TxL Kanalschätzung ebenso nur die $N_P$ inneren Übertragungskoeffizienten $H_{TxL}[n]$ schätzen kann. Die verbleibenden Übertragungskoeffizienten werden auf Basis der TxL Kanallänge ermittelt.

## a. Schätzung der Verbundkoeffizienten $\hat{H}_{joint}[n_1,n_2]$

Der Gleichung (14) kann entnommen werden, dass im rauschfreien Fall sich jeder Unterträger von $\widetilde{R}_i[n]$ aus dem Summenprodukt verschiedener Verbundkoeffizienten mit den zugehörigen Präambel-Unterträgern zusammensetzt. Die Idee der Schätzung der Verbundkoeffizienten ist es daher, durch Addition bzw. Subtraktion des mittleren Empfangssignals $E\{\widetilde{R}_i[n]\}$ verschiedener Präambeln einen Summanden in (1) zu akkumulieren, während sich alle anderen Summanden auslöschen. Daher müssen die Präambel-Unterträger $P_i[n]$ so entworfen werden, dass das Produkt $P_i[n_1]P_i^*[n_2]$ für ein bestimmtes Unterträgerpaar $n_1$, $n_2$ für jede Präambel zwar den gleichen Betrag hat, aber für verschiedene Präambeln ein anderes Vorzeichen aufweist. Die Analyse von (1) zeigt, dass sich bei den äußeren Unterträger der TxL Interferenz $\widetilde{B}_i[n]$ am wenigsten Verbundkoeffizienten überlagern. Deshalb nutzt das vorgestellte Schätzverfahren die Beobachtung der äußeren, negativen Unterträger $\widetilde{R}_i[n]$, $n\in[-NP+1,-N_P/2]$. Äquivalent könnten jedoch auch die Unterträger $n \in [N_P/2+1,N_P]$ genutzt werden. Der vorgestellte Schätzansatz zielt auf die Bestimmung der folgenden, ausgewählten Verbundkoeffizienten ab, die sich zu den drei Mengen $H_1$, $H_2$ und $H_3$ zusammenfassen lassen

$$\mathcal{H}_1 = \left\{ \hat{H}_{joint}\left[-\frac{N_P}{2}+1,\frac{N_P}{2}\right]\right\}$$

$$\mathcal{H}_2 = \left\{ \hat{H}_{joint}\left[-\frac{N_P}{2}+1,+1\right],\ldots,\hat{H}_{joint}\left[-\frac{N_P}{2}+1,\frac{N_P}{2}-1\right]\right\}$$

$$\mathcal{H}_3 = \left\{ \hat{H}_{joint}\left[-\frac{N_P}{2}+2,\frac{N_P}{2}\right],\ldots,\hat{H}_{joint}\left[0,\frac{N_P}{2}\right]\right\} \qquad (15)$$

Die Auswahl dieser Verbundkoeffizienten zur Schätzung ist das Ergebnis einer genaueren Analyse von (14) mit der Randbedingung, nur eine minimale Anzahl von verschiedenen Präambeln zur TxL Kanalschätzung zu benötigen. Weiterhin ergab sich die Notwendigkeit, mindestens $N_P/2$ verschiedene Präambeln zu nutzen. Es sind jedoch auch weitere Schätzverfahren denkbar, die auf die Bestimmung anderer Verbundkoeffizienten abzielen.

Die Idee der selektiven Akkumulation und Auslöschung von verschiedenen Summanden in (14) zur Schätzung der Verbundkoeffizienten lässt sich in Bedingungen an die Produkte $P_i[n_1]P_i^*[n_2]$ formulieren. In der Figur 5 ist ein möglicher Satz von Anforderungen an $P_i[n_1]P_i^*[n_2]$ der $N_P$/2 Präambeln dargestellt.

Dabei ist der Wert $\mathcal{P} \in \mathbb{R}^+ \setminus \{0, \infty\}$ ein Entwurfsparameter des Schätzverfahrens. Die Tabelle spezifiziert das Kreuzprodukt der Unterträger $P_i[n_1]$ und $P_i[n_2]$ für jede der $N_P$/2 verschiedenen Präambeln. Dieses muss abhängig von $n_1$ und $n_2$ dem Positiven oder Negativen der festgelegten Konstante $\mathcal{P}$ entsprechen.

$$P_i[n_1]P_i^*[n_2] = \left\{ +\mathcal{P}, -\mathcal{P} \right\} . \quad (16)$$

Es ist auch vorstellbar unterträgerabhängig unterschiedliche Konstanten für die Produkte zu verwenden und somit eine Wichtung der Unterträger einzuführen. Zum besseren Verständnis des Schätzverfahrens soll dieser Fall jedoch nicht betrachtet werden.

Die zweite und vierte Zeile der Tabelle in der Figur 5 definiert den Unterträgerindex $n_1$ und $n_2$. Die erste Spalte spezifiziert den Präambelindex $i$. Die grau schattierte Fläche in der Tabelle verdeutlicht den Bereich des negativen Vorzeichens von $P$. Basierend auf diesen Bedingungen konnte ein beispielhafter Satz von $N_P$/2 Präambeln gewonnen werden, der in der Tabelle in Figur 6 dargestellt ist.

Zur Schätzung des UL Kanals wird vorausgesetzt, dass die Basisstation den Index $i$ der aktuell abgestrahlten Präambel bereits kennt bzw. ihr als Seiteninformation übermittelt wurde. Somit kann die Basisstation die diskrete Übertragungsfunktion des UL Kanals auf Basis der empfangenen Präambeln bestimmen.

Die Schätzung der Verbundkoeffizienten soll am Beispiel von $\hat{H}_{joint}[-NP/2+1, N_P/2]$ erklärt werden. Hierzu wird der Erwartungswert des Emfangssiganls $\tilde{R}_i[n]$ auf dem Unterträger $n = -N_P+1$ betrachtet. Nach Gleichung (13) und (14) sowie unter Beachtung der Mittelwertfreiheit des Rauschen $\tilde{W}[n]$ resultiert er zu

$$E\left\{\tilde{R}_i[-N_P + 1]\right\} = \frac{1}{\eta N_P} H_{TxL}\left[-\frac{N_P}{2} + 1\right] H_{TxL}^*\left[\frac{N_P}{2}\right] P_i\left[-\frac{N_P}{2} + 1\right] P_i^*\left[\frac{N_P}{2}\right] . \quad (17)$$

Basierend auf (17) und dem vorgestellten Präambelsatz in Figur 6 lässt sich dieser Verbundkoeffizient aus der Beobachtung der Empfangssignale aller $N_P$/2 abgestrahlten Präambeln schätzen

$$\hat{H}_{joint}[-N_P/2+1, N_P/2] = \frac{2\eta}{\mathcal{P}} \sum_{i=1}^{N_P/2} E\left\{\tilde{R}_i[-N_P + 1]\right\} . \quad (18)$$

In der Praxis muss der Erwartungswert $E\{\tilde{R}_i[n]\}$ geschätzt werden, wofür die angesprochene $N_w$-fache Wiederholung jeder Präambel dient. Der Erwartungswert $E\{R_i[n]\}$ wird nun durch die Mittelung über die der $i$.ten Präambel zugeordneten $N_w$ Empfangssignale approximiert.

Dem beschriebenen Grundprinzip zur Schätzung der Verbundkoeffizienten folgend werden die Verbundkoeffizienten der Mengen $H_2$ und $H_3$ mit $g \in [2, N_P/2+1]$ durch

$$\hat{H}_{joint}[-N_P/2+1, N_P/2-g+1] =$$

$$\frac{\eta N_P}{(N_P - 2g + 2)\mathcal{P}}\left(\frac{N_P}{2} - g + 1\right)\mathrm{E}\left\{\tilde{R}_1[-N_P + g]\right\} + \sum_{i=g}^{N_P/2}\mathrm{E}\left\{\tilde{R}_i[-N_P + g]\right\}$$

(19)

und

$$\hat{H}_{joint}[-N_P/2+g, N_P/2] =$$

$$\frac{\eta N_P}{(N_P - 2g + 2)\mathcal{P}}\left(\frac{N_P}{2} - g + 1\right)\mathrm{E}\left\{\tilde{R}_{g-1}[-N_P + g]\right\} - \sum_{i=g}^{N_P/2}\mathrm{E}\left\{\tilde{R}_i[-N_P + g]\right\}$$

(20)

geschätzt. Eine genauere Analyse der Mengen $H_1$, $H_2$ und $H_3$ lässt folgenden Zusammenhang erkennen. Während $H_2$ und $H_3$ entweder $\hat{H}_{TxL}[-N_P/2+1]$ oder $\hat{H}_{TxL}[-NP/2+1]$ beinhalten, hängt $H_1$ von beiden Übertragungskoeffizienten ab. Deshalb stellt $H_1$ eine Verbindung zwischen $H_2$ und $H_3$ her.

### b. Schätzung der Übertragungskoeffizienten $\hat{H}_{TxL}[n]$

Im zweiten Schritt sollen die Übertragungskoeffizienten $\hat{H}_{TxL}[n]$, $n \in [-NP/2+1, N_P/2]$ errechnet werden. Die $N_P$-1 geschätzten Verbundkoeffzienten beschreiben jedoch lediglich die Verknüpfungen zwischen den $N_P$ gesuchten Übertragungskoeffizienten. Deshalb ist für die Berechnung von $\hat{H}_{TxL}[n]$ die Kenntnis über einen initialen Übertragungskoeffizienten erforderlich, der im Folgenden mit $\hat{H}_{TxL}[n_{start}]$ gekennzeichnet werden soll. Da $H_1$ eine Verbindung zwischen den beiden anderen Mengen $H_2$ und $H_3$ darstellt, empfiehlt es sich, den Index des Startkoeffizienten als $n_{start} \in \{-N_P/2+1, N_P/2\}$ zu wählen. Zur weiteren Herleitung des Schätzverfahrens wird $n_{start} = -N_P/2+1$ gewählt.

Wie aus Gleichung (14) zu erkennen ist, wirkt sich eine konstante Phasendrehung der Impulsantwort bzw. der Übertragungsfunktion des TxL Kanals nicht auf die TxL Interferenz aus. Deshalb kann die Phase des Startkoeffizienten beliebig festgelegt werden und soll zu $\arg(\hat{H}_{TxL}[n_{start}])=0$ gewählt werden. Der Betrag des Startkoeffizienten hingegen ist noch nicht bekannt. Es wird daher anstatt $H_{TxL}[n]$ zunächst eine skalierte Version der Übertragungskoeffizienten geschätzt, die mit $\tilde{H}_{TxL}[n]$ bezeichnet werden soll. Als Startkoeffizient wird deshalb willkürlich

$$\tilde{H}_{TxL}\left[-\frac{N_P}{2}+1\right] = 1 = \rho\left|H_{TxL}\left[-\frac{N_P}{2}+1\right]\right|$$

(21)

festgelegt, wobei der Skalierungsfaktor $\rho \in \mathbb{R}^+$ eine positive, reelle Zahl ist und später ermittelt wird. Die skalierten Übertragungskoeffizienten lassen sich durch die Division der geschätzten Verbundkoeffizienten mit dem Startkoeffizienten

$$\tilde{H}_{TxL}\left[-\frac{N_P}{2}+1\right]$$

bzw. den bereits geschätzten, skalierten Übertragungskoeffizienten $\hat{H}_{TxL}[n]$ bestimmen

$$\tilde{H}_{TxL}[n] = \begin{cases} \left(\dfrac{\hat{H}_{joint}[-N_P/2+1, n]}{\tilde{H}_{TxL}[-N_P/2+1]}\right)^* & \text{für } 1 \le n \le \dfrac{N_P}{2} \\[2em] \dfrac{\hat{H}_{joint}[n, N_P/2]}{\tilde{H}^*_{TxL}[N_P/2]} & \text{für } -\dfrac{N_P}{2}+1 \le n \le 0 \end{cases} \qquad (22)$$

Zum Abschluss der Schätzung von $H_{TxL}[n]$ muss der Skalierungsfaktor $\rho$ ermittelt werden. Betrachtet man den Fall einer vernachlässigbaren Rauschstörung, d.h. $\hat{H}_{joint}[n_1, n_2] = H_{TxL}[n_1]H^*_{TxL}[n_2]$ und berücksichtigt die Vernachlässigbarkeit eines konstanten Phasenunterschiedes stehen die geschätzten, skalierten Übertragungskoeffizienten $\hat{H}_{TxL}[n]$ mit den tatsächlichen Übertragungskoeffizienten $H_{TxL}[n]$ wie folgt in Beziehung

$$\tilde{H}_{TxL}[n] = \begin{cases} \rho H_{TxL}[n] & \text{für } -\dfrac{N_P}{2}+1 \le n \le 0 \\[1.5em] \dfrac{1}{\rho} H_{TxL}[n] & \text{für } 1 \le n \le \dfrac{N_P}{2} \end{cases} \qquad (23)$$

Basierend auf der Hypothese $\hat{H}_{TxL}[n]$ als Übertragungskoeffizienten des TxL Kanals kann die zugehörige TxL Interferenz $\hat{B}_i[n]$ nach (1) berechnet werden. Durch Vergleich der TxL Interferenz Hypothese mit dem empfangene Signal $\tilde{R}_i[n]$ kann auf den Skalierungsfaktor $\rho$ zurückgeschlossen werden. Hierzu soll die Differenz $\Delta\tilde{R}_i[n]$ E$\{\tilde{R}_i[n]\}$-$\hat{B}_i[n]$ dem Unterträger $n$=-$N_P$/2+1 betrachtet werden. Sie lässt sich nach Gleichung (13) und (14) zu

$$\Delta\tilde{R}_i\left[-\frac{N_P}{2}+1\right] = \mathrm{E}\left\{\tilde{R}_i\left[-\frac{N_P}{2}+1\right]\right\} - \hat{B}_i\left[-\frac{N_P}{2}+1\right]$$

$$= \frac{1}{\eta N_P}\left(\left(\frac{1}{\rho^2}-1\right)\hat{H}_{TxL}\left[-\frac{N_P}{2}+1\right]\hat{H}^*_{TxL}[0]P_i\left[-\frac{N_P}{2}+1\right]P_i^*[0] \right.$$

$$\left. + (1-\rho^2)\hat{H}_{TxL}[1]\hat{H}^*_{TxL}\left[\frac{N_P}{2}\right]P_i[1]P_i^*\left[\frac{N_P}{2}\right]\right) \qquad (24)$$

formulieren. Wie deutlich zu erkennen ist, enthält die Differenz $\Delta\tilde{R}i[N_P$/2+1] den gesuchten Skalierungsfaktor $\rho$ in quadrierter Form. Durch die Kombination von verschieden Präambeln aus Figur 6 und unter Beachtung des positiven Wertebereichs von $\rho$ lassen sich aus (24) die zwei Lösungen

$$\hat{\rho}_1^2 = \left(1 - \eta N_P \frac{(m-1)\Delta\tilde{R}_m[-m+1] - \sum_{i=1}^{m-1}\Delta\tilde{R}_i[-m+1]}{(N_P-2)\mathcal{P}\tilde{H}_{TxL}[-m+1]\tilde{H}^*_{TxL}[0]}\right)^{-1}$$

$$\hat{\rho}_2^2 = 1 + \eta N_P \frac{(m-1)\Delta\tilde{R}_m[-m+1] - \sum_{i=1}^{m-1}\Delta\tilde{R}_i[-m+1]}{(N_P-2)\mathcal{P}\tilde{H}_{TxL}[-m+1]\tilde{H}^*_{TxL}[0]} \qquad (25)$$

mit $m = N_P/2$ ableiten und führen zu dem geschätzten Skalierungsfaktor $\hat{\rho}$

$$\hat{\rho} = \sqrt{\frac{1}{2}(\hat{\rho}_1^2 + \hat{\rho}_2^2)} \quad . \quad (26)$$

Durch Umstellung von (23) ergeben sich die geschätzten Übertragungskoeffizienten $\hat{H}_{TxL}[n]$ durch

$$\hat{H}_{TxL}[n] = \begin{cases} \dfrac{1}{\hat{\rho}} \tilde{H}_{TxL}[n] & \text{für } -\dfrac{N_P}{2} + 1 \leq n \leq 0 \\[3mm] \hat{\rho} \tilde{H}_{TxL}[n] & \text{für } 1 \leq n \leq \dfrac{N_P}{2} \end{cases} \quad . \quad (2)$$

**c. Schätzung der TxL Kanalimpulsantwort $\hat{h}_{TxL}[k]$**

Die geschätzte TxL Kanalimpulsantwort $\hat{h}_{TxL}[k]$ resultiert aus der $\eta N_P$-Punkte IDFT der geschätzten Übertragungskoeffizienten $\hat{H}_{TxL}[n]$

$$\hat{h}_{TxL}[k] = \frac{1}{\eta N_P} \sum_{n=-\eta N_P/2+1}^{\eta N_P/2} \hat{H}_{TxL}[n] e^{j2\pi\frac{kn}{\eta N_P}} \quad . \quad (28)$$

Die TxL Interferenz hängt jedoch nur von den $N_P$ inneren Übertragungskoeffizienten $\hat{H}_{TxL}[n]$ ab, weshalb das vorgestellte Schätzverfahren auch nur diese Koeffizienten schätzen konnte. Dies bedeutet aber auch, dass für die TxL Kompensation die restlichen $(\eta-1)N_P$ Übertragungskoeffizienten willkürlich gewählt werden können. Aus der Kenntnis der TxL Kanallänge $L_{TxL}$ ergeben sich jedoch einige Einschränkungen der Koeffizientenwahl. Unter Berücksichtigung der, von der IDFT inhärent angenommene Periodizität der Signale führt die Kenntnis über $L_{TxL}$ zu der Bedingung

$$\hat{h}_{TxL}[k] = 0, \; \forall k \in [L_{TxL}, \eta N_P - 1] \quad . \quad (29)$$

In Verbindung mit (28) lassen sich daraus folgende, gleichzeitig zu erfüllende Gleichungen ableiten

$$\sum_{n_1} \hat{H}_{TxL}[n_1] e^{j2\pi\frac{kn_1}{\eta N_P}} = -\sum_{n_1} \hat{H}_{TxL}[n_1] e^{j2\pi\frac{kn_1}{\eta N_P}}, \quad \forall k \in [L_{TxL}, \eta N_P - 1] \quad , \quad (30)$$

wobei die Summation auf der linken Seite von (30) über alle Inband-Unterträger $n_1 \in [-N_P/2+1, N_P/2]$ auszuführen ist und die Summation auf der rechten Seite über alle Außerband-Unterträger $n_2 \in [-NP/2+1, N_P/2] \cup [-N_P/2+1, N_P/2]$ zu erfolgen hat. Die linke Seite von (30) beschreibt somit den Beitrag der bereits geschätzten, $N_P$ inneren Übertragungskoeffizienten auf die Impulsantwort. Auf der rechten Seite der Gleichung erstreckt sich die Summation über die gesuchten, restlichen Übertragungskoeffizienten. Somit spannt (30) ein lineares Gleichungssystem mit $\eta N_P$-$L_{TxL}$ Gleichungen und $(\eta-1)N_P$ Unbekannten auf. Solange die Bedingung $N_P \geq L_{TxL}$ erfüllt ist, können die gesuchten Übertragungskoeffizienten durch das bestimmte bzw. überbestimmte Gleichungssystem in (30) berechnet werden. Anschließend kann die gesuchte TxL

Kanalimpulsantwort $\hat{h}_{TxL}[k]$ durch (28) bestimmt werden.

Mithilfe der geschätzten Impulsantwort kann die TxL Interferenz für das allgemeine UL Signal $s_{UL}[k]$ entsprechend (7) rekonstruiert werden

$$s_C[k] = c\left(h_I[k] + jc_q h_Q[k]\right) * \left(\left|\hat{h}_{TxL} * s_{UL}\right|^2 [k] + \hat{\varepsilon}\right). \quad (31)$$

Der DC-Korrekturterm $\hat{\varepsilon}$ der TxL Interferenz wird dabei durch die zeitliche Mittelung der rekonstruierten TxL Interferenz ermittelt

$$\hat{\varepsilon} = -\frac{1}{N_C} \sum_{m=0}^{N_C-1} \left|\hat{h}_{TxL} * s_{UL}\right|^2 [k-m]. \quad (32)$$

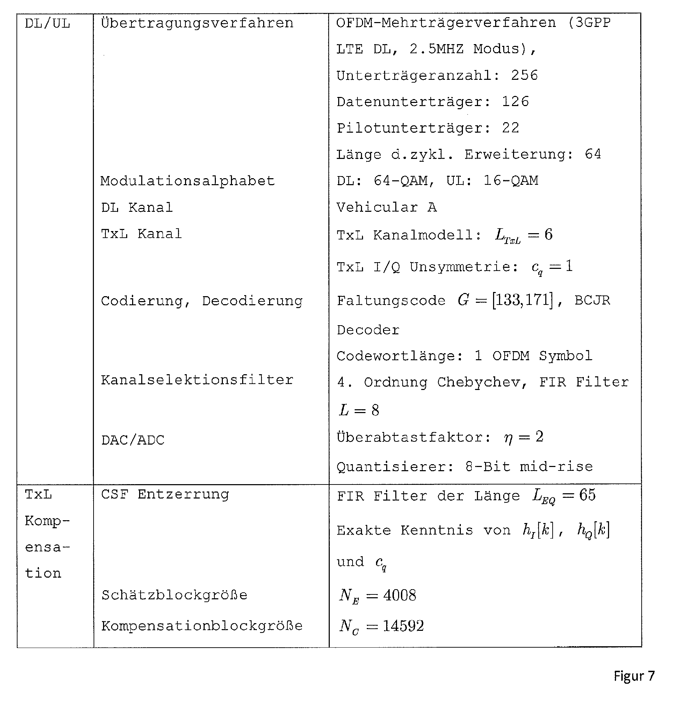

Die Untersuchung der Leistungsfähigkeit des vorgestellten präambelbasierten TxL Schätzverfahrens soll anhand eines im UL und DL eingesetzten OFDM Mehrträgerverfahrens untersucht werden, dessen Systemparameter in der Tabelle in Figur 7 zusammengefasst sind. Die Untersuchung konzentriert sich auf die TxL Kompensation, weshalb eine perfekte Kenntnis des DL Kanals mit einem Zero-Forcing Entzerrer im Empfänger betrachtet wird.

Die Impulsantwort des TxL Kanals wurde wie folgt modelliert:

$$h_{TxL}[k] = \begin{cases} c_{TxL} e^{-\tau + j\varphi_{TxL}[k]} & \text{für } k = 0 \\ c_{TxL} e^{-\frac{\tau k}{2} + j\varphi_{TxL}[k]} & \text{für } 1 \leq k \leq L_{TxL} - 1 \end{cases}. \quad (33)$$

Das Kanalmodell zeichnet sich dadurch aus, dass die Beträge der Pfade deterministische Größen sind und ab dem zweiten Pfad entsprechend der Abklingkonstanten $\tau$ mit $k$ abnehmen.

Des Weiteren ist zu bemerken, dass der Betrag des ersten Pfades mit dem dritten Pfad übereinstimmt. Die Phasenwinkel $\varphi_{TxL}[k]$ der Pfade werden als unabhängige Zufallsgrößen modelliert, die einer Gleichverteilung im Intervall $[0, 2\pi]$ folgen. Der Skalierungsfaktor $c_{TxL}$ wird entsprechend des gewünschten TxL SIR Verhältnisses $\gamma_{TxL}$ bestimmt.

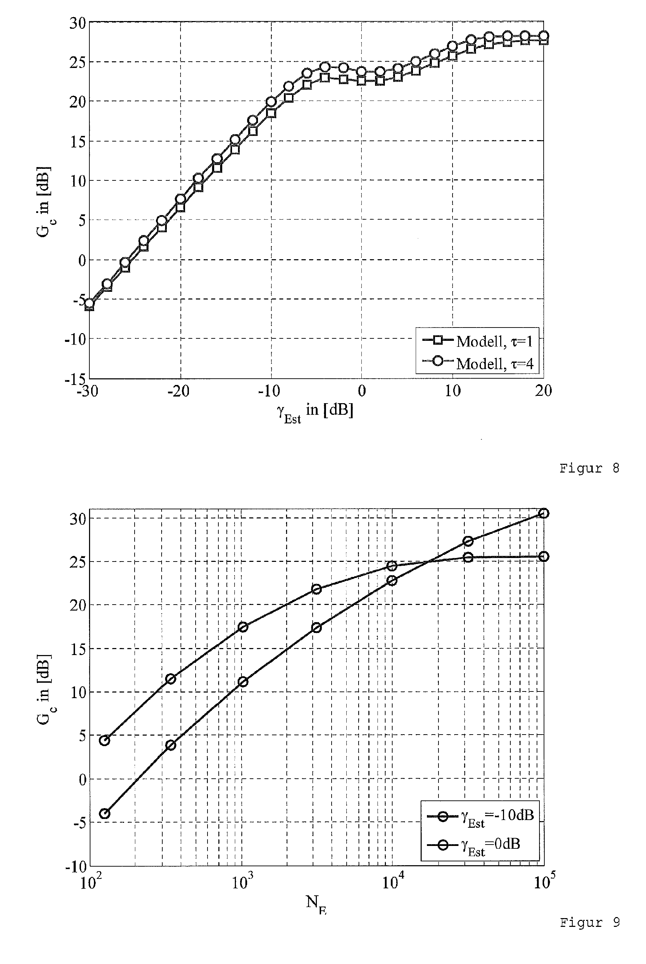

In der Figur 8 ist der Kompensationsgewinn des präambelbasierten Schätzverfahrens über dem SNR der TxL Schätzung abgetragen, wobei auf das TxL Kanalmodell mit $\tau=1,4$ und $L_{TxL}=6$ zurückgegriffen wurde. Wie die Abbildung zeigt, steigt der Kompensationsgewinn der präambelbasierten Schätzung zunächst mit $\gamma_{Est}$ an. Im hohen $\gamma_{Est}$ Bereich flacht der Kompensationsgewinn infolge der imperfekten CSF Entzerrung aus. Im gesamten, betrachteten $\gamma_{Est}$ Bereich führt die Frequenzselektivität des TxL Kanals nur zu einer leichten Degradation von $G_C$.

In der Figur 9 ist $G_C$ über die Schätzblockgröße $N_E$ abgetragen. Zum einen ist der überproportionale $G_C$ Abfall des präambelbasierten Schätzverfahrens mit sinkendem $\gamma_{Est}$ feststellbar, welcher der Fehlerfortpflanzung des Schätzalgorithmus geschuldet ist. Zum anderen flacht $G_C$ im hohen $N_E$ Bereich für $\gamma_{Est}$ = -10dB auf einem höheren Niveau aus als für $\gamma_{Est}$ = 0dB. Ursache hierfür sind die Impulsantworten der CSF Entzerrungsfilter. Ihre Koeffizienten werden entsprechend der Korrelationseigenschaften des Signals am CSF Eingang berechnet. Die Korrelationseigenschaften dieses Eingangssignals ändern sich mit $\gamma_{Est}$. Deshalb unterscheiden sich die berechneten Entzerrungskoeffizienten für $\gamma_{Est}$ = -10dB und 0dB, wodurch auch der Entzerrungsfehler und folglich der maximale Kompensationsgewinn beeinflusst wird.

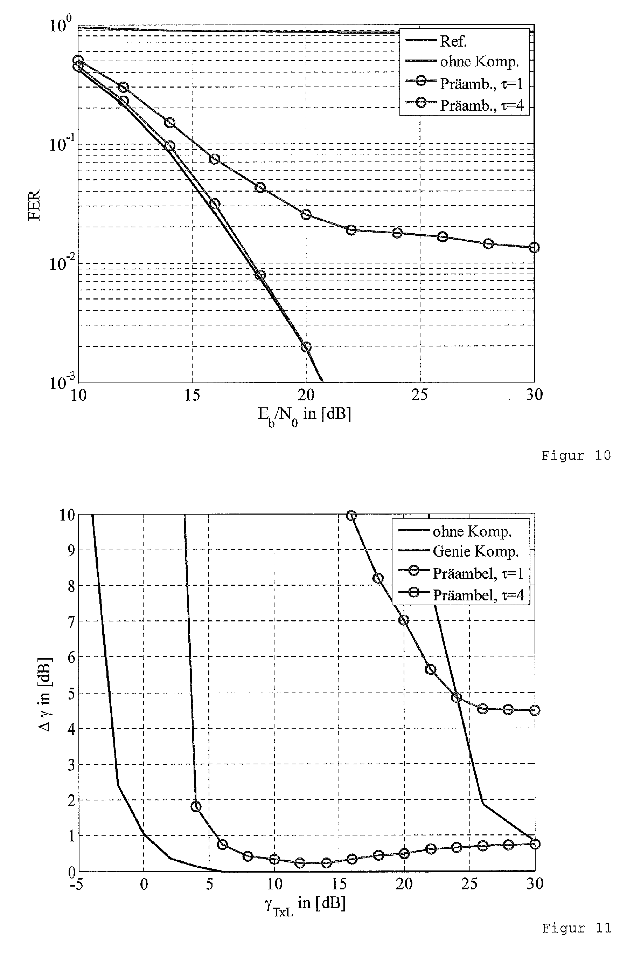

Die Betrachtung der Rahmenfehlerrate (engl.: Frame Error Rate, FER) der DL Übertragung in Figur 10 spiegelt die vorangegangenen Ausführungen wider. Im Fall des näherungsweise frequenzflachen TxL Kanals ($\tau=4$) kann das präambelbasierte Schätzverfahren erhebliche Verbesserungen erzielen. Im Gegensatz hierzu nimmt die Leistungsfähigkeit des Schätzverfahrens mit steigender Frequenzselektivität des TxL Kanals rapide ab.

Die Ursache für die im Vergleich zu Figur 8 wesentlich geringere Leistungsfähigkeit der präambelbasierten Schätzung im Fall eines frequenzselektiven TxL Kanals ($\tau=1$) ist die Fehlerfortpflanzung.

Zur Analyse der Störempfindlichkeit der DL Übertragung gegenüber einer kompensierten bzw. nicht kompensierten TxL Interferenz ist in Figur 11 der SNR Verlust gegenüber einer TxL-freien Übertragung bei einer Zielrahmenfehlerrate von 1% als Funktion des TxL SIR $\gamma_{TxL}$ dargestellt.

Zur Beurteilung der Leistungsfähigkeit des präambelbasierten Schätzverfahrens ist der SNR Verlust des Genie Schätzers eingezeichnet, dessen Kompensationssignal $s_C[k]=b[k]$ ist. Der Anstieg des SNR Verlustes des Genie Schätzers im niedrigen $\gamma_{TxL}$ Bereich ist auf die, mit zunehmendem TxL, reduzierte, effektiv für das DL Signal verfügbaren ADC Quantisierungsauflösung zurückzuführen. Dieser Effekt wurde in der Arbeit Frotzscher, A. und G. Fettweis: Tx Leakage Impact on Analog-Digital Conversion in zero-IF Receivers. In: Proc. IEEE Vehicular Technology Conference VTC Fall 2009, September 2009 analysiert.

Die Betrachtung des SNR Verlustes des präambelbasierten Schätzverfahrens bestätigt die Erkenntnisse der vorherigen Ergebnisse. Zudem kann im Fall der präambelbasierten TxL Schätzung ein charakteristischer Anstieg des SNR Verlustes für $\gamma_{TxL}$>15dB bei einem näherungsweise frequenzflachen TxL Kanal ($\tau$=4) festgestellt werden. Er ist auf die Fehlerfortpflanzung des Schätzverfahrens zurückzuführen und zeigte sich bereits in Figur 8 in dem überproportionalen Abfall des Kompensationsgewinns mit sinkendem SNR $\gamma_{Est}$ der TxL Schätzung.

## Patentansprüche

1. Verfahren zur Kompensation eines Übersprechens eines in einem Sendezweig erzeugten Sendesignals auf einen Empfangszweig in einem nach dem Direktmisch-Prinzip arbeitenden Sendeempfänger, **dadurch gekennzeichnet, dass** innerhalb des Sendezweiges festgelegte digitale Sendesignalsequenzen (Präambeln) generiert und gesendet werden, dass in dem Empfangszweig mittels dieser digitalen Sendesignalsequenzen eine Übersprechcharakteristik geschätzt wird, dass auf der Grundlage dieser Schätzung ein Signal zur Kompensation des übersprechenden Sendesignals erzeugt wird und dass mittels dieses Kompensationssignals im Bereich der digitalen Basisbandsignalverarbeitung im Empfangszweig die Kompensation des Übersprechens erfolgt.

2. Verfahren nach Anspruch 1, **dadurch gekennzeichnet, dass** sich die Sendesignalsequenzen aus Orthogonal Frequency Division Multiplexing (OFDM) Symbolen zusammensetzen.

3. Verfahren nach Anspruch 1 oder 2, **dadurch gekennzeichnet, dass** mithilfe der OFDM Sendesignalsequenzen die Übersprechcharakteristik in einem Frequenzbereich geschätzt und mittels Fourier-Rücktransformation die Repräsentation der Übersprechcharakteristik im Zeitbereich berechnet wird.

Figur 1

Figur 2

Figur 3

vom analogen Empfänger-Frontend — $r[k]$ → Vorverarbeitung → $\tilde{r}[k]$ → $CP^{-1}$ → $\eta N_P\text{-DFT}$ → $\tilde{R}[n]$ → TxL Kanal-schätzung → $\hat{h}_{TxL}[k]$ → TxL Interf.-rekonstruktion → $s_C[k]$ → zum DL Demodulator (+/−)

Präambel-Generator → $P_I[n]$ → $\eta N_P\text{-IDFT}$ → $p_I[k]$ → CP

TxL Kanalschätzung und TxL Interferenz-rekonstruktion

vom UL Modulator

zum analogen Sende-Frontend — $s_{UL}[k]$

**Figur 4**

| Präambel-index i | Unterträgerindex n₁ | | | | | |
|---|---|---|---|---|---|---|
| | $\frac{N_P}{2}$ | | | $\frac{N_P}{2}+1$ | | |
| | Unterträgerindex n₂ | | | | | |
| | $\frac{N_P}{2}+2$ | $\frac{N_P}{2}+3$ | ... | 0 | 1 | ... $\frac{N_P}{2}$ |
| 1 | $\mathcal{P}$ | $\mathcal{P}$ | ... | $\mathcal{P}$ | $\mathcal{P}$ | ... $\mathcal{P}$ |
| 2 | $-\mathcal{P}$ | $\mathcal{P}$ | ... | $\mathcal{P}$ | $\mathcal{P}$ | ... $\mathcal{P}$ |
| 3 | $-\mathcal{P}$ | $-\mathcal{P}$ | ... | $\mathcal{P}$ | $\mathcal{P}$ | ... $\mathcal{P}$ |
| ⋮ | ⋮ | ⋮ | | ⋮ | ⋮ | ⋮ |
| $\frac{N_P}{2}$ | $-\mathcal{P}$ | $-\mathcal{P}$ | ... | $-\mathcal{P}$ | $\mathcal{P}$ | ... $\mathcal{P}$ |

**Figur 5**

| Präambel-index i | Unterträgerindex n | | | | | | |
|---|---|---|---|---|---|---|---|
| | $\frac{N_P}{2}+1$ | $\frac{N_P}{2}+2$ | $\frac{N_P}{2}+3$ | ... | 0 | 1 ... | $\frac{N_P}{2}$ |
| 1 | $\sqrt{\mathcal{P}}$ | $\sqrt{\mathcal{P}}$ | $\sqrt{\mathcal{P}}$ | ... | $\sqrt{\mathcal{P}}$ | $\sqrt{\mathcal{P}}$ ... | $\sqrt{\mathcal{P}}$ |
| 2 | $\sqrt{\mathcal{P}}$ | $-\sqrt{\mathcal{P}}$ | $\sqrt{\mathcal{P}}$ | ... | $\sqrt{\mathcal{P}}$ | $\sqrt{\mathcal{P}}$ ... | $\sqrt{\mathcal{P}}$ |
| 3 | $\sqrt{\mathcal{P}}$ | $-\sqrt{\mathcal{P}}$ | $-\sqrt{\mathcal{P}}$ | ... | $\sqrt{\mathcal{P}}$ | $\sqrt{\mathcal{P}}$ ... | $\sqrt{\mathcal{P}}$ |
| ⋮ | ⋮ | ⋮ | ⋮ | | ⋮ | ⋮ | ⋮ |
| $\frac{N_P}{2}$ | $\sqrt{\mathcal{P}}$ | $-\sqrt{\mathcal{P}}$ | $-\sqrt{\mathcal{P}}$ | ... | $-\sqrt{\mathcal{P}}$ | $\sqrt{\mathcal{P}}$ ... | $\sqrt{\mathcal{P}}$ |

**Figur 6**

| DL/UL | Übertragungsverfahren | OFDM-Mehrträgerverfahren (3GPP LTE DL, 2.5MHZ Modus), Unterträgeranzahl: 256 Datenunterträger: 126 Pilotunterträger: 22 Länge d.zykl. Erweiterung: 64 |
|---|---|---|
| | Modulationsalphabet | DL: 64-QAM, UL: 16-QAM |
| | DL Kanal | Vehicular A |
| | TxL Kanal | TxL Kanalmodell: $L_{TxL} = 6$ TxL I/Q Unsymmetrie: $c_q = 1$ |
| | Codierung, Decodierung | Faltungscode $G = [133,171]$, BCJR Decoder Codewortlänge: 1 OFDM Symbol |
| | Kanalselektionsfilter | 4. Ordnung Chebychev, FIR Filter $L = 8$ |
| | DAC/ADC | Überabtastfaktor: $\eta = 2$ Quantisierer: 8-Bit mid-rise |
| TxL Kompensation | CSF Entzerrung | FIR Filter der Länge $L_{EQ} = 65$ Exakte Kenntnis von $h_I[k]$, $h_Q[k]$ und $c_q$ |
| | Schätzblockgröße | $N_E = 4008$ |
| | Kompensationblockgröße | $N_C = 14592$ |

Figur 7

Figur 8

Figur 9

Figur 10

Figur 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **Brandolini, M. ; P. Rossi ; D. Manstretta ; F. Svelto.** Toward multistandard mobile terminals - fully integrated receivers requirements and architectures. *IEEE Transactions on Microwave Theory and Techniques,* Marz 2005, vol. 53 (3), 1026-1038
- **Lie, D. Y. C. ; J. Kennedy ; D. Livezey ; B. Yang ; T. Robinson ; N. Sornin ; C. Saint ; L. E. Larson.** Circuit and System Design for a Homodyne W-CDMA Front-End Receiver RF IC. *Proc. International Symposium on VLSI Design, Automation and Test,* April 2006, 1-4
- **Bar, P. ; A. Giry ; P. Triolet ; G. Parat ; D. Pache ; P. Ancey ; J. F. Carpentier.** Full-Duplex Receiver And PA Integration With BAW Devices. *Proc. IEEE Topical Meeting on Silicon Monolithic Integrated Circuits in RF Systems SiRF 2008,* Januar 2008, 9-12
- **Schacherbauer, W. ; A. Springer ; T. Ostertag ; C. C. W. Ruppel ; R. Weigel.** A flexible multiband frontend for software radios using high IF and active interference cancellation. *Proc. IEEE MTT-S International Microwave Symposium Digest,* Mai 2001, vol. 2, 1085-1088
- **Williamson, M. ; S. Kannangara ; M. Faulkner.** Performance Analysis of Adaptive Wideband Duplexer. *Australian Telecommunications Networks and Applications Conference,* 2003
- **O'Sullivan, T. ; R. A. York ; B. Noren ; P. M. Asbeck.** Adaptive duplexer implemented using single-path and multipath feedforward techniques with BST phase shifters. *IEEE Transactions on Microwave Theory and Techniques,* Januar 2005, vol. 53 (1), 106-114
- **Kannangara, S. D.** *Adaptive Duplexer for Software Radio. Doktorarbeit,* 2006
- **Aparin, V. ; G. J. Ballantyne ; C. J. Persico ; A. Cicalini.** An integrated LMS adaptive filter of TX leakage for CDMA receiver front ends. *IEEE Journal of Solid-State Circuits,* Mai 2006, vol. 41 (5), 1171-1182
- **Frotzscher, A. ; G. Fettweis.** Preamble design for the digital compensation of Tx Leakage in zero-IF receivers. *Proc. IEEE 10th Workshop on Signal Processing Advances in Wireless Communications SPAWC '09',* 429-433
- **Frotzscher, A. ; G. Fettweis.** Tx Leakage Impact on Analog-Digital Conversion in zero-IF Receivers. *Proc. IEEE Vehicular Technology Conference VTC Fall 2009,* September 2009